(19)

Europäisches
Patentamt
European
Patent Office
Office européen
des brevets

(11) **EP 2 963 761 A1**

(12) **EUROPEAN PATENT APPLICATION**

(43) Date of publication:
06.01.2016 Bulletin 2016/01

(51) Int Cl.:
*H02J 3/38* (2006.01)          *H01M 8/24* (2006.01)
*H02M 3/158* (2006.01)

(21) Application number: 14175397.0

(22) Date of filing: 02.07.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Haldor Topsøe A/S
2800 Kgs. Lyngby (DK)**

(72) Inventors:
• **Friis Pedersen, Claus
  DK-2720 Vanløse (DK)**
• **Raskmark Rønne, Rune
  2800 Kgs. Lyngby (DK)**

(74) Representative: **Haldor Topsøe A/S
Haldor Topsøes Allé 1
2800 Kgs. Lyngby (DK)**

(54) **An efficient AC-DC electrical power converting unit configuration**

(57)    A novel AC-to-DC electrical power converting unit configuration consists of one or several AC-to-DC rectifiers and one or several electrical power converters (DC-to-DC or DC-to-AC) connected to one or several DC loads. The loads and the power converters are coupled in series such that the same current flows through the input of the loads and the input of the power converters, and the input power to the series of loads and converters is provided by the output of the rectifiers. This novel design is more cost-effective and more power efficient than traditional designs.

**Fig. 1**

EP 2 963 761 A1

**Description**

The present invention relates to a novel design or configuration of a highly efficient electrical AC-DC power supply unit (PSU) which can be used e.g. for electrolysis systems or for electroplating. More specifically, the invention concerns an AC-DC electrical power converting unit configuration consisting of one or several AC-to-DC rectifiers and one or several electrical power converters (DC-to-DC or DC-to-AC) connected to one or several DC loads or sources.

Electrolysis is a method used within chemistry and manufacturing, where a direct electric current (DC) is used to drive an otherwise non-spontaneous chemical reaction. Commercially, electrolysis is highly important, for example for the production of hydrogen and chlorine and also as a stage in the separation of elements from naturally occurring sources, such as ores, using an electrolysis cell.

Deposition by electrophoresis comprises a broad range of industrial processes including electrocoating, cathodic electro-deposition and electrophoretic coating or electrophoretic painting. A characteristic feature of these processes is that colloidal particles, which are suspended in a liquid medium, migrate under the influence of an electric field (electrophoresis) and are deposited onto an electrode.

Electrical DC power supply units are widely used in the industry to provide DC current and voltage for electrolysis and electrophoretic deposition.

The supply of electrical DC power from AC mains is usually carried out in two stages: In stage 1, the mains AC voltage is converted into a (quasi) DC voltage, and then the stage 1 voltage is adapted to the desired DC-load voltage level with a DC-DC converter with or without galvanic isolation. Coupling of the mains is typically implemented over only three conductors, i.e. without a neutral conductor (J.W. Kolar & T. Friedli, 'The Essence of three-phase PFC rectifier systems Part I', IEEE Transactions on Power Electronics, vol. 28 no. 1, pp 176-198 (January 2013) and T. Friedli, M. Hartmann & J.W. Kolar, 'The Essence of three-phase PFC rectifier systems Part II', IEEE Transactions on Power Electronics, vol. 29 no. 2, pp 543-560 (February 2014)).

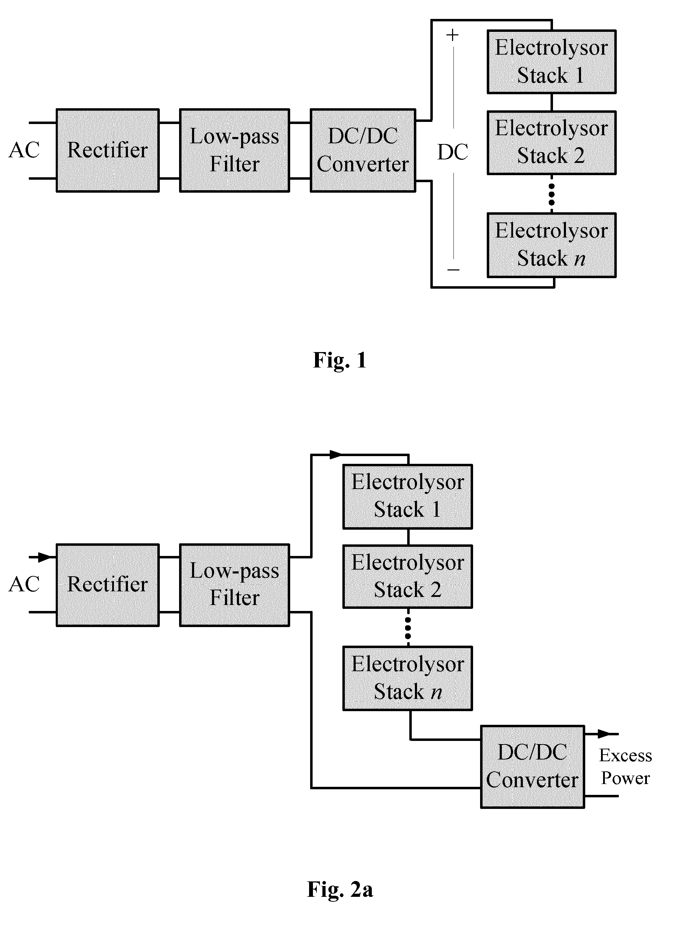

Low-pass filters consisting of inductor and capacitor are typically inserted between the afore-mentioned two power stages in order to stabilize the DC bus voltage as well as smoothen the AC mains current and attenuate EMI noises. The system configuration of these traditional DC power supply units (PSUs) based on diode uncontrollable rectifiers, low frequency filters and DC-DC converters, which are coupled 'in parallel' to the loads, is depicted in Fig. 1. Here, the loads are shown as electrolysor stacks.

Depending on the voltage of the load, the DC-DC converter output can be regulated in Buck (output DC voltage is lower than peak input voltage), Boost (output DC voltage is higher than peak input voltage) or Buck/Boost (output DC voltage can be higher or lower than peak input voltage), (B.N. Singh et al., 'A review of three-phase improved power quality AC-DC converters', IEEE Transactions on Industrial Electronics, vol. 51 no. 3, pp 641-660 (March 2004)).

Alternative schemes to the two-stage AC-DC configuration of Fig.1 are a wide variety of schemes for controlling the DC output voltage of three-phase rectifiers using thyristors. The most common one is to replace the six diodes by silicon control rectifiers (SCRs) (R. W. Erickson and D. Maksimovic, "Fundamentals of Power Electronics" 2nd Edition, Springer, 2001). By delaying the firing of the SCRs, the DC output voltage can be reduced.

The output voltage of this AC-DC converter can be expressed as

$$V_{DC} = \frac{3\sqrt{2}}{\pi} \cdot V_{L-L,rms} \cdot \cos\alpha$$

where $V_{L-L,\,rms}$ is the rms line-to-line voltage and $\alpha$ is the phase control angle.

in this SCR based rectifier, the power factor is defined as

$$Power\ factor = 0.955 \cdot |\cos\alpha|$$

Therefore, even though this topology is a single stage AC-DC conversion, due to phase lag in the fundamental component of current which leads to a displacement factor, the power factor can be quite low when the DC output voltage is low. Hence, an additional power factor correction circuit is needed in order to obtain a wide DC voltage regulation range.

In order to reduce the power conversion stages and also to achieve a lower current total harmonics distortion ($THD_i$), a fully controlled active three-phase AC-DC bridge circuit, in which there are six (or more) controllable silicon switches such as IGBTs (insulated gate bipolar transistors) employed, can be used. Many studies have been presented in order to analyse and design these active rectifier Buck type topologies with a high power factor and a regulated output voltage for different applications (e.g. M. Liserre, A. Dell'Aquila & F. Blaabjerg, 'An overview of three-phase voltage source active rectifiers interfacing utility', Bologna Power Tech Conference (2003); A. Stupar, T. Friedli, J. Minibock & J.W. Kolar, 'Towards a 99% efficient three-phase Buck type PFC rectifier for 400 V DC distribution systems', IEEE Transactions on Power Electronics, vol. 27 no. 4, pp 1732-1744 (April 2012)). However, the high cost and complex control are still the main issues which limit wide application thereof in industry.

In the traditional configurations as shown in Fig. 1, the electrical power of the rectifiers and of the DC-DC converters are equal to or larger than the total electrical power of the loads. The costs and power loss of the typical PSU is dominated by the converter as shown in Table 1, which gives examples of representative commercially available rectifiers, low-pass filters and converters. The loss of these components indicates a typical PSU loss of around 9%, which is in good agreement with the 8% loss of a typical commercial PSU unit (http://www.regatron.com/en/topcongss.html).

Table 1

|  | 3-phase rectifier | Low pass filter | DC-DC converter | PSU unit |
|---|---|---|---|---|
| Power loss | 0.4% | 0.1% | 8.0% | 8.5% |
| Cost (€/kW) | 0.48 | 5.5 | 714 | 720 |
| [ref.] | [1] | [2] | [3] | sum of components |
| References to Table 1:<br>[1]: IXYS VUO 80: http://docs-europe.electrocomponents.com/webdocs/0af0/0900766b80af088b.pdf.<br>[2] http://www.mtecorp.com/products/dc-linkchokes/documentation.<br>[3] Astec AIF 300V: http://docs-europe.electrocomponents.com/ webdocs/0b31/0900766b80b31bcb.pdf. | | | | |

In the future, a new and potentially very large market for electrolysis is expected in relation to energy storage. Here, electrolysis systems will convert electrical energy into chemical energy when the electricity supply (e.g. from wind turbines) exceeds the actual demand. The chemically stored energy can then be used e.g. for producing fuel for the transportation sector, or it can be converted back into electricity when the actual demand exceeds the available supply from renewable sources. In this situation, the most important candidate to be used as an energy storage medium is hydrogen, which can be produced from water by electrolysis. Furthermore, hydrogen can be stored in large volumes (for example in caverns), and it can be used directly as a transportation fuel. It can also be efficiently converted back into electrical energy in fuel cells.

An important part of the operating and investment costs of an electrolysis system is related to the cost, efficiency and lifetime of the power supply units. It is estimated that the cost of an alkaline electrolysis system in 2020 will be around 10000 DKK/Nm$^3$/h (The Partnership for Hydrogen and Fuel Cells, "Roadmap for MW alkaline electrolysis", 2012). For large scale industrial applications (e.g. for solar cells) the cost of power converters can come down to around 1000 DKK/kW. With a lower heating value of 3.3 kWh/Nm$^3$ for hydrogen, a PSU cost of 1000 DKK/kW will for an electrolysor system correspond to 3300 DKK/Nm$^3$ or one third of the total system costs estimated for 2020. Furthermore, in 2020 the efficiency of an alkaline electrolysis system is expected to be 98% (The Partnership for Hydrogen and Fuel Cells, "Roadmap for MW alkaline electrolysis", 2012). The numbers from Table 1 clearly indicate a need for improved PSU performance to meet these expectations.

For energy storage applications, a very good reliability as well as long system lifetimes are also needed for the electrolysis systems. In 2020, alkaline electrolysis stack degradation ratios of only 0.025% are expected (The Partnership for Hydrogen and Fuel Cells, "Roadmap for MW alkaline electrolysis", 2012). Allowing for a total degradation of 10%, this will lead to electrolysis stack lifetimes exceeding 40 years. Long lifetimes are therefore needed for future PSUs for electrolysis systems.

Traditional PSUs can be designed for bi-directional operation (e.g. http://www.regatron.com/en/topcongss.html), implying that AC power can be converted into DC power and vice versa. This bi-directional operation is desirable for energy storage purposes, where the PSU can then be used both for storing energy (e.g. AC from grid -> DC to electrolysis systems) and for feeding DC power to the AC grid, where the DC power can be provided for example from fuel cells or solar cells. Traditional bi-directional PSUs are symmetrical, implying that the same maximum power can be converted from AC to DC and vice versa. However, for energy storage it will be desirable to have asymmetrical PSUs available in situations where the peak AC -> DC capacity is larger than the peak DC -> AC capacity. The reason for this is that renewable power sources, such as wind power, typically are available in very asymmetrical and irregular patterns, peaking for example when the wind is blowing heavily, while the power consumption is more evenly and predictably distributed over time.

The present invention relates to a novel design or configuration of a bi-directional electrical AC-DC power supply unit (PSU) which can be used e.g. for electrolysis systems. Compared to traditional PSU designs, the invention meets the requirements for

- high cost efficiency
- low loss
- bi-directional and asymmetrical operation
- long lifetime.

More specifically, the present invention relates to an AC-DC electrical power converting unit configuration consisting of one or several AC-to-DC rectifiers and one or several electrical power converters (DC-to-DC or DC-to-AC) connected to one or several DC loads, wherein the loads and the power converters are coupled in series such that the same current flows through the input of the loads and the input of the power converters, and wherein the input power to the series of loads and converters is provided by the output of the rectifiers.

For this invention, the converter relative power capacity, $\eta$, can be defined as the ratio between the maximum input power of the converter and the maximum output power of the rectifier.

For this invention, the relative converter power capacity, $\eta$, is less than 80%, preferably less than 50% and most preferably less than 25%.

In the configuration according to the invention, the power removed by the converters (the excess power) is used for other relevant purposes. Preferably the excess power is fed back to the load or to the power source feeding the rectifier. Alternatively, the excess power can be used for the other system components, e.g. heaters, motors and control systems, or the excess power can be fed back to the grid.

In some cases there will be a power loses $\beta$ of the excess power from the outlet of the converter to the relevant application. If, for example, the converter is a DC-DC converter and the excess power is fed back to the grid, then an additional DC-AC converter is needed to feed the excess power to the application.

The net loss (relative to the total power capacity of the PSU) of PSUs according to the invention can be expressed as:

$$\texttt{net-loss = rectifier loss + } \eta \texttt{-(converter loss + } \beta \texttt{)}$$

According to the invention, the net loss of the system is lower than 10%, preferably lower than 3% and most preferably lower than 1%.

In a configuration according to the invention, the load is one or more electrochemical units or one or more electrolysis units. The electrolysis units can be based for example on alkaline technology, on polymer electrolyte membrane (PEM) cell technology or on solid oxide electrolysis cell (SOEC) technology.

In a configuration according to the invention, the rectifier is preferably a 1-phase or 3-phase rectifier, and the load is preferably one or more SOEC units coupled in series.

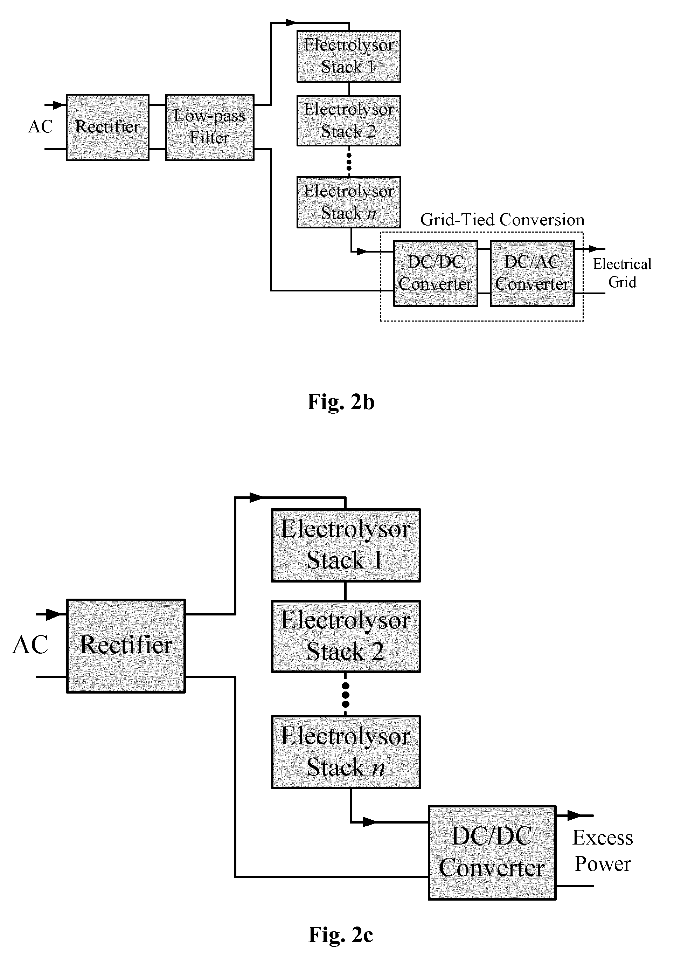

Examples of the design or configuration according to the invention are shown in Fig. 2a, 2b and 2c. Here, a rectifier is used to provide a quasi-DC voltage. Said rectifier could for example be a 3-phase rectifier providing 560 V. The rectified voltage is applied to one or several loads which in Fig. 2a, 2b and 2c is shown as electrolysor stacks coupled in series. The number of stacks/cells is chosen such that the maximum operating voltage of all stacks/cells is close to, but yet below the output voltage of the rectifier. A DC-power converter (here DC-DC) is coupled in series with the electrolysor stacks and used in current control mode to control the current through the stacks. At the same time, the power converter removes the excess power, defined as the power provided by the rectifier but not used by the electrolysor stacks.

To obtain a high net efficiency it is important that the excess power is used for other relevant purposes. The excess power can for example be used to drive other units in the electrolysis system, or it can be fed back to the grid. Fig. 2b shows a configuration where an optional DC-AC converter is connected to the output of the DC-DC converter to achieve such "grid-tied conversion" of the excess power.

The voltage ripple from the rectifiers can be removed by a low-pass filter, but in the present invention it is preferred that the ripples on the loads are removed by the converters operating as active filters. Thereby, the power ripple of the loads can be reduced to less than 50%, preferably to less than 10% and most preferably to less than 2% of the ripple from the rectifier. A configuration according to this embodiment is shown in Fig. 2c.

For the present invention, low values of capacity for the low-pass filters on the DC-bus are therefore preferred. According to the invention, the total capacity inserted on the DC-bus between the rectifier and the converter is lower than 5000 $\mu$F, preferably lower than 1000 $\mu$F and most preferably lower than 200 $\mu$F.

Bi-directional operation

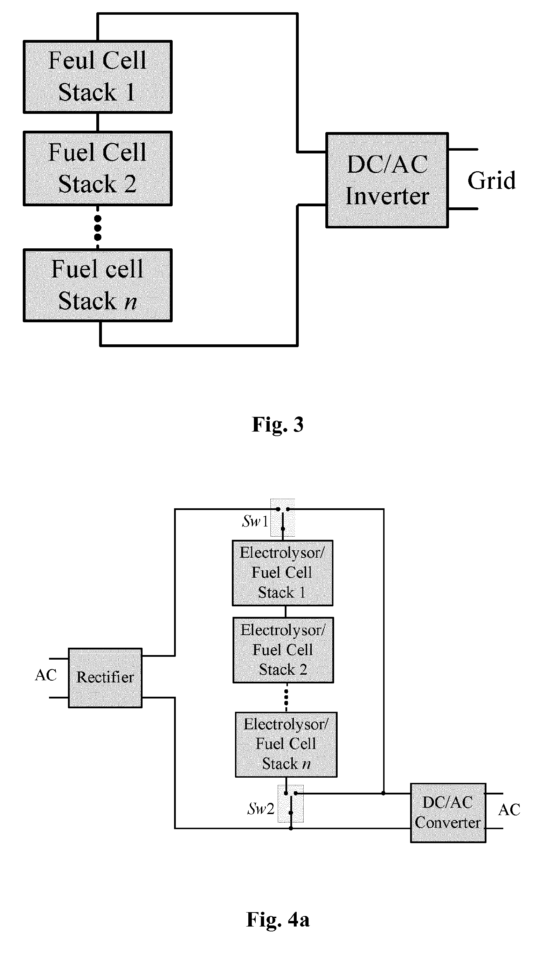

A switching matrix may allow the converter to be coupled to a DC power source and thereby allow the present invention to operate as a bi-directional AC-DC converter with an asymmetrical conversion capacity in AC-to-DC mode compared to DC-to-AC mode. This configuration can for example be used to feed AC power to the grid from DC power produced by fuel cells or solar cells. This configuration is shown in Fig. 3, where the DC power source is shown as fuel cell stacks.

In the bi-directional configuration according to the invention, it is preferred that the power capacity is larger when a power load is connected than when a power source is connected. It is especially preferred that the power capacity is at least 25% larger, preferably at least 100% larger and most preferably at least 400% larger when a power load is connected than when a power source is connected.

Loads, such as electrolysis systems, and power sources, such as fuel cells or solar cells, can be coupled flexibly to the same converter in a configuration according to the invention. These loads are preferably SOEC units, and the power sources are preferably SOFC units, which are coupled flexibly to the same converter.

These two applications, i.e. power storage and power feed, can be combined into one unit that can operate in both modes as shown in Fig. 4a-4c. Fig. 4a shows the generic configuration of the PSU connected to solid oxide cell stacks that can operate both as loads (electrolysis or SOEC) and as sources (fuel cells or SOFC). Two switches

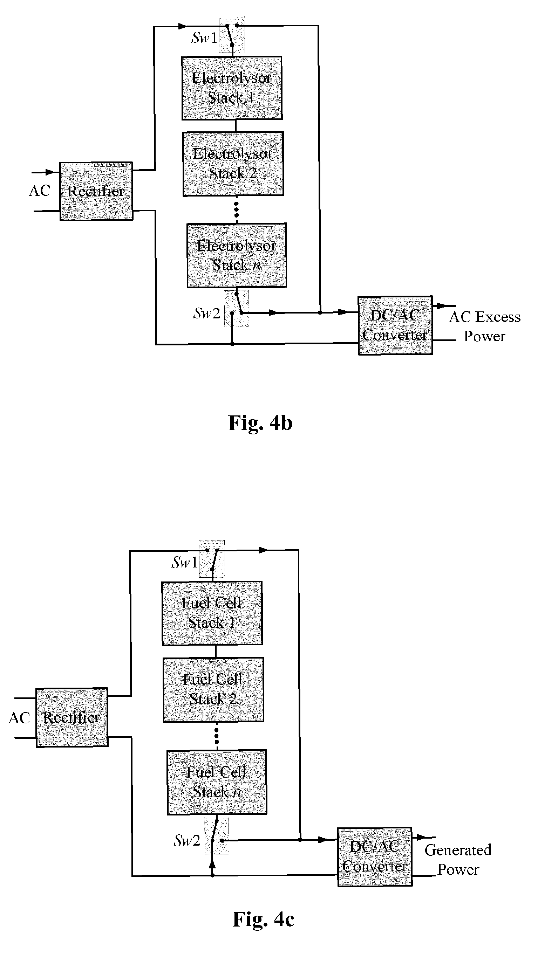

(Sw1 and Sw2) are used to control whether the PSU operates in AC-to-DC (DC power load) mode or in DC-to-AC (DC power source) mode. Fig. 4b shows the configuration of the switches when the solid oxide cell stacks are operating as loads (electrolysor stacks), and Fig. 4c shows the configuration of the switches when the solid oxide cell stacks are operating as sources (fuel cell stacks).

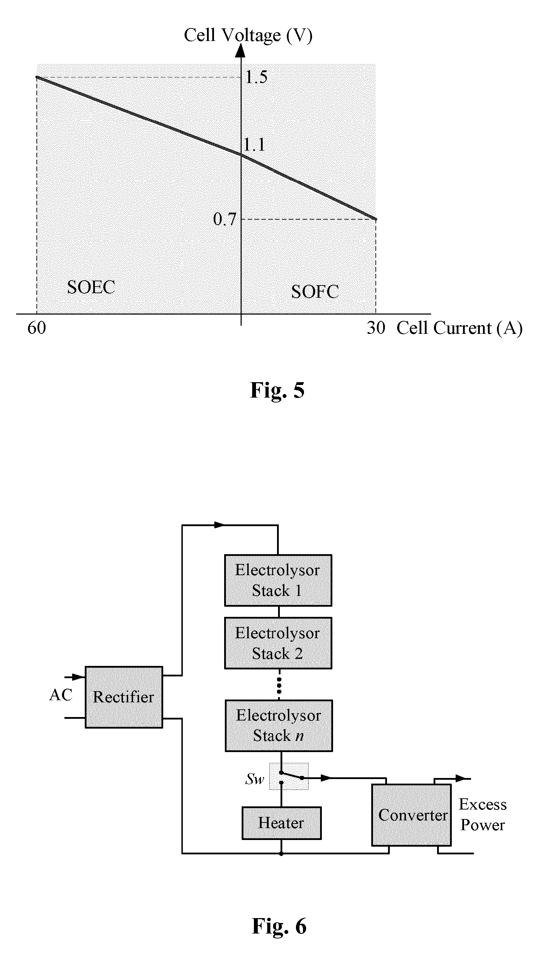

A design criterion for the size of the converter in solid oxide cell systems could be to design the bi-directional PSU in such a way that the same unit could be used to convert the full capacity of the solid oxide cell stacks when operated in fuel cell (SOFC) mode. Referring to the solid oxide cell I-U curve of Fig. 5, which is described in the design example later in the document, it is seen that for Fig. 5, the maximum power capacity per solid oxide cell is:

$$0.7 \text{ V} \cdot 30 \text{ A} = 21 \text{ W in fuel cell mode (SOFC)}$$

and

$$1.5 \text{ V} \cdot 60 \text{ A} = 90 \text{ W in electrolysis mode (SOEC).}$$

For the configuration of Fig. 4, an attractive power ratio, $\eta$, of the AC-DC converter (relative to the rectifier power) would therefore be in the order of 21 W/90 W = 23%.

Use of excess power

The high net-efficiency of the present invention relies on the ability to feed the excess power to a suitable application. This could for example be to feed it back to the AC power grid, or it could be to feed it back to the AC-DC rectifier input. In both cases, a full DC-DC-AC conversion is needed, which typically is associated with some power loss (generally in the order of 5%).

An alternative would be to couple an additional load in series with the electrolysis stacks before converting the power. This is particularly attractive if the additional load needs high power when the power to the electrolysis stacks is low and low power when the power of the electrolysis system is high.

At electrolysor cell voltages below 1.29 V, the power necessary to split a water molecule is higher than the power provided electrically. In this case the stack is cooled during operation, and the stack then needs to be heated by external sources. This heating could for example be done by electrical heaters as shown in Fig. 6. Here a fast switch can connect either the resistive heater or the converter with the electrolysis stack loads. In this configuration, the resistance of the heater must be chosen sufficiently low to allow the necessary voltage drop across the electrolysis stack at all relevant current levels.

Durability and lifetime

The lifetime of power supply units is typically defined by two main aspects:

- the temperature of the active components (typically the power transistors in the converter) where high temperature reduces lifetime, and
- the lifetime of the electrolytic capacitors used for ripple reduction in the system.

As already mentioned, electrolytic capacitors can be omitted in the present invention by using the converters as active filters. Thus, with the present invention one of the potentially critical failure mechanisms of traditional PSUs can be avoided.

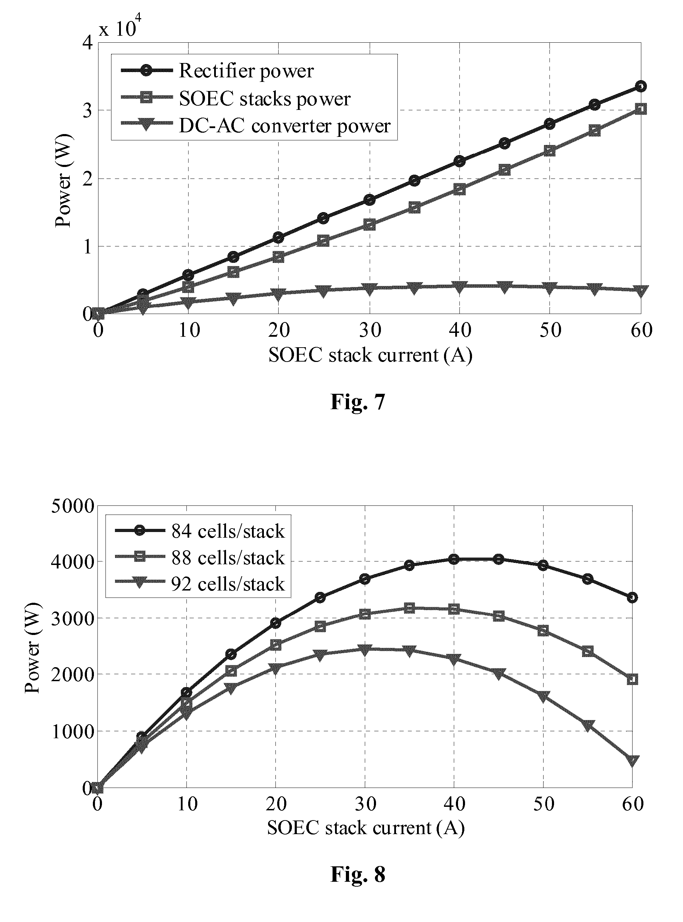

Additionally, the present invention can also typically operate with a low temperature of the converter power transistors. For the present invention, the maximum power load and hence the maximum operation temperature of the converter is around 50-70% of the full load (30-40 A on Fig. 7) and not at the maximum operating current (60 A on Fig. 7). For power storage application a large amount of independently operating electrolysis systems can be expected to be installed, as MW, and GW of power storage will be required. For the previously discussed examples, the power of each system will be 560 V ·60 A = 33.6 kW indicating that at least 30 such systems are needed to provide MW storage capacity.

With many independent electrolysis systems it will therefore be possible to operate each system close to the maximum operating current and then simply shut off entire units when the power needs to be reduced substantially. This implies that PSUs based on the present invention can operate simultaneously close to the maximum electrolysis system power where the converter power is relatively low. This will result in a low converter transistor temperature and hence a long lifetime of the converters and the PSU.

Two examples of operating conditions for the proposed PSUs are simulated in details in the following. The simulation results clearly show that the proposed power supply can operate as expected in simulations using SOEC stacks as loads.

Example 1 (design example)

For the proposed configuration, the sizing of the converter is essential, as most of the cost and power loss is associated with the converter as shown in Table 1.

As an example of a possible design according to the invention, a power supply unit (PSU) operating together with SOEC units is considered. The U-I characteristics of an individual SOEC cell can be simplified to the quasi-linear relation as given in Fig. 5. As a rectifier, a standard 3-phase full-wave diode rectifier operating on 400 V (3 x 230 V) is used. This could e.g. be IXYS VUO80. In this case, the voltage DC output voltage can be calculated as:

$$V_{DC} \approx 1.414 \cdot V_{RMS} \approx 1.41 \cdot \sqrt{3} \cdot 230 = 561.7 \text{ V}$$

It is assumed that each SOEC stack comprises 84 cells connected in series and that four SOEC stacks are coupled in series to make a high power system as shown in Fig. 2. Thus, the system parameters can be given as follows:

Table 2: System specifications in SOEC mode

| parameter | Value |
|---|---|
| Number of cells per stack | 84 |
| Number of stacks in system | 4 |
| Maximum system voltage in SOEC (V) | 504 |
| Minimum system voltage in SOEC (V) | 369.6 |
| Maximum current in SOEC (A) | 60 |
| Minimum current in SOEC (A) | 0 |
| R_cell in SOEC (ohms) | 0.0067 |
| R_stack in SOEC (ohms) | 0.56 |

Based on the system specifications in Table 2, the power can be calculated for the different building blocks of the system, i.e. diode rectifier, DC-AC converter and SOEC cells. The operating power of these blocks is illustrated in Fig. 7 as function of the operating current.

Fig. 7 shows that in this case, the maximum required power capacity of the converter is 4032 W, which corresponds to 12% of the maximum required power capacity of the diode rectifier (33600 W) and 13.3% of the maximum power capacity of the loads (the SOEC stacks) (30545 W).

This example of the present invention can be compared with the traditional PSU design shown in Fig. 1. For a traditional design, the required power capacity of the power converter would at least have to match the power capacity of the rectifier.

Table 1 showed that the cost and loss of a PSU is dominated by the converter, implying that for the example above the cost and loss of the present invention would only be roughly 12% of the cost and loss of traditional solutions.

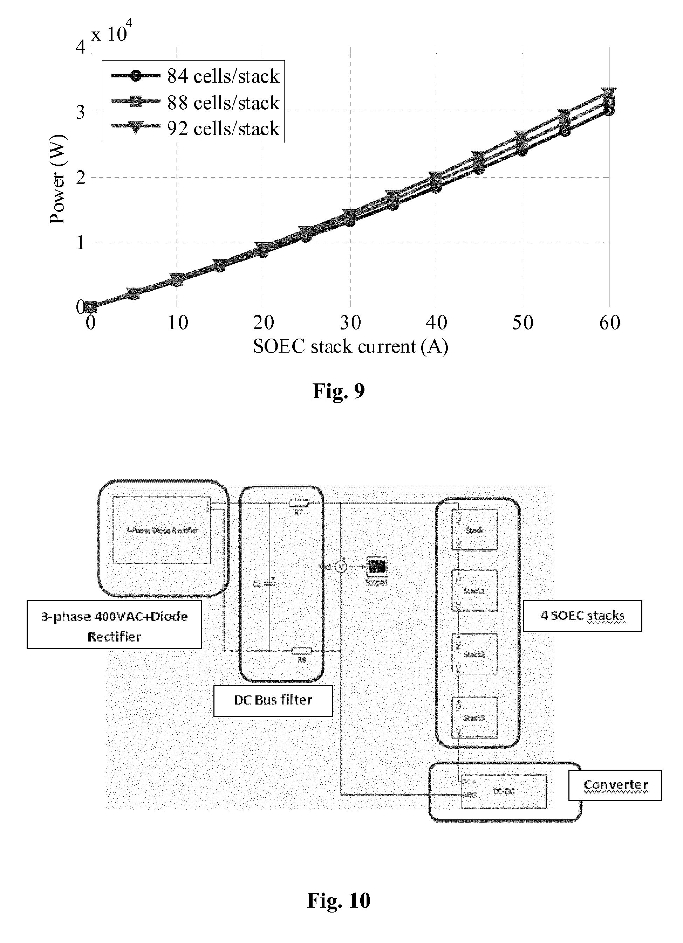

These cost and efficiency advantages of the present invention may be improved even further if the number of cells in each stack is changed so as to make the output voltage of the SOEC system even closer to the rectifier output voltage of 560 V DC. Using the specification data in the above table 2 as reference, the analysis results can accordingly be found in Fig. 8 and Fig. 9. Fig. 8 shows the power load of the converter as function of load (electrolysor) current for different numbers of cells/stack. Fig. 9 shows the power of the loads (electrolysor stacks) as function of the electrolysor current for different numbers of cells/stack. These results are summarised in Table 3.

Table 3: Comparison of different number of cells in each stack

| Cells per stack | Voltage of SOEC system (V) | Max power of SOEC system (kW) | Input voltage of DC-AC (V) | Max power of DC-AC converter (kW) |
|---|---|---|---|---|
| 84 | 504~369.9 | 30.3 | 190.4~56 | 4.0 |
| 88 | 528~387.2 | 31.2 | 172.8~32 | 3.2 |
| 92 | 552~404.8 | 33.1 | 155.2~8 | 2.5 |

From Figs. 8 and 9 and Table 3 it can be clearly seen that if the voltage of the SOEC system is closer to the output voltage of the diode rectifier, i.e. the DC bus voltage of 560 V, then the power sharing of the SOEC system is larger and, therefore, only a low power DC-AC converter is needed (for instance, 2.5 kW DC-AC at 92 cells per stack). But when the voltage of the cascaded SOEC stacks is very close to the rectifier voltage, the input voltage of the DC-AC inverter will have a very low minimum input voltage (8 V at 92 cells per stack) and also have a very large input voltage variation factor ($V_{max}/V_{min}$ = 155.2/8 at 92 cells per stack). Such operation will be challenging for the converter design, as it will be challenging for the converter to achieve high efficiency over a wide input voltage range.

Example 2 (system simulations)

In order to verify the system functionality in more details, the system according to the invention is simulated by Matlab/Simulink and PLECS software. The simulation circuit is depicted in Fig. 10. The configuration according to the invention consists of a 3-phase diode rectifier (diode + 3-phase 400 V AC), a DC bus filter comprising capacitor C2 and resistors R7 and R8, four SOEC stacks and a DC-DC converter.

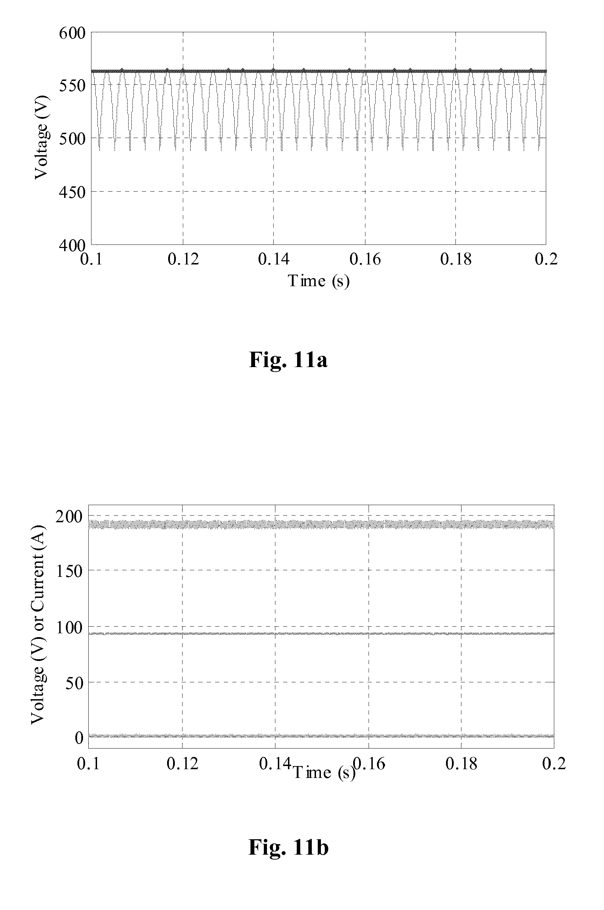

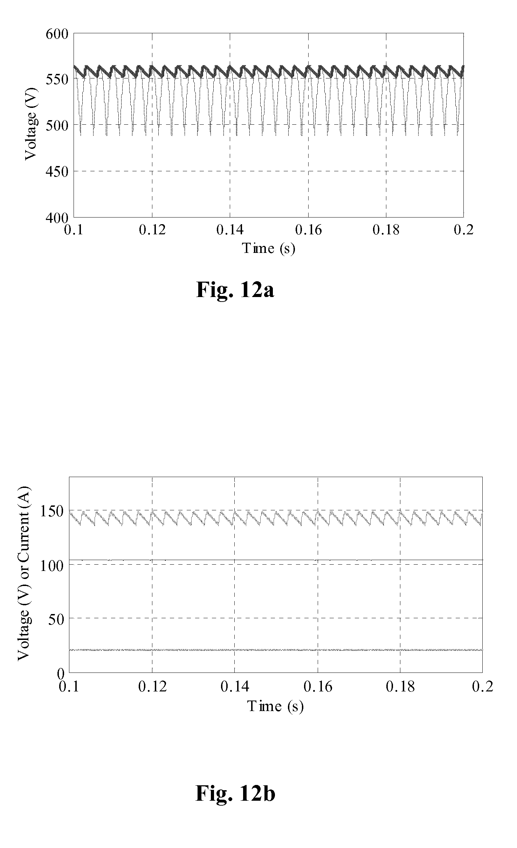

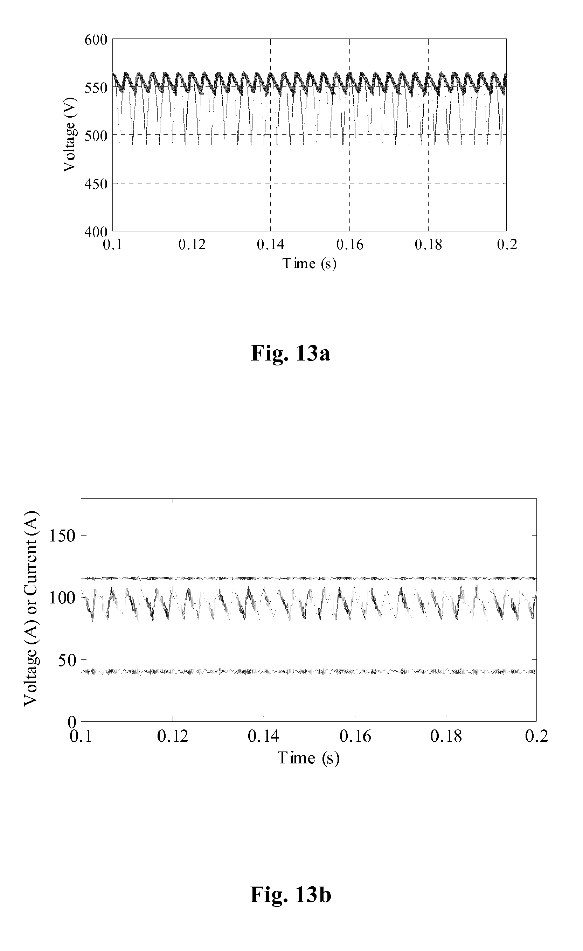

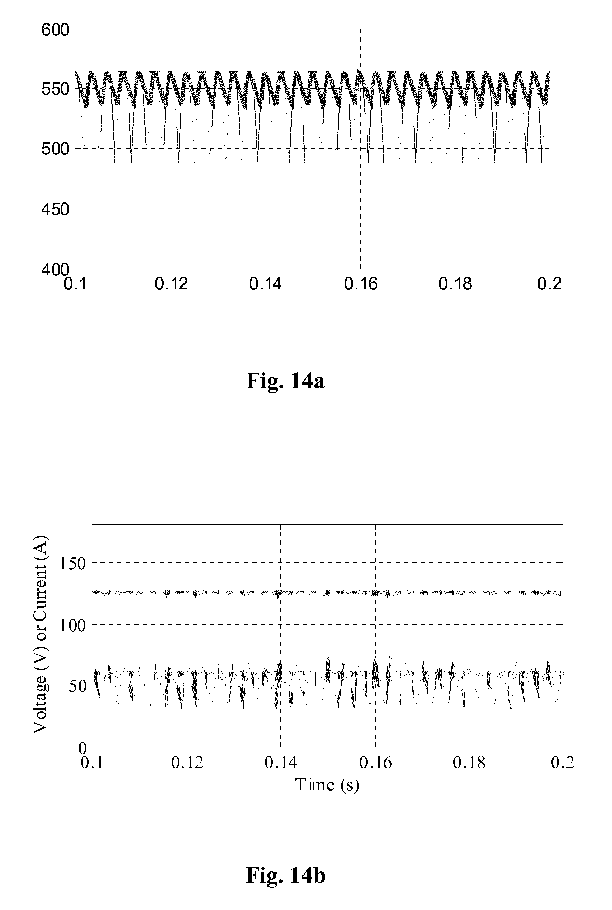

The simulation results are shown in Figs 11 to 15 for SOEC current values of 0, 20, 40 and 60 A. Here the following symbols are used:

VDC-bus: Voltage across the DC bus, i.e. voltage of filter capacitor; 4700 $\mu$F capacitor is used on the DC bus.

$V_{Rec}$: Voltage after the 3-phase diode rectifier without the DC bus capacitor.

$V_{CON}$: Voltage across the input of the DC converter, i.e. voltage between DC+ and GND in DC-DC block as shown in Fig. 10.

$V_{SOEC}$ stack: Voltage across one SOEC stack, i.e. voltage between FC+ and FC- in Fig. 10.

$I_{SOEC}$: Current flowing through SOEC stacks and power converter.

The results on Figs 11-14 show that, as desired, the input voltage of the converter is changed with different load (SOEC) currents; the lower the SOEC current or power, the larger the voltage drop is over the converter and vice versa.

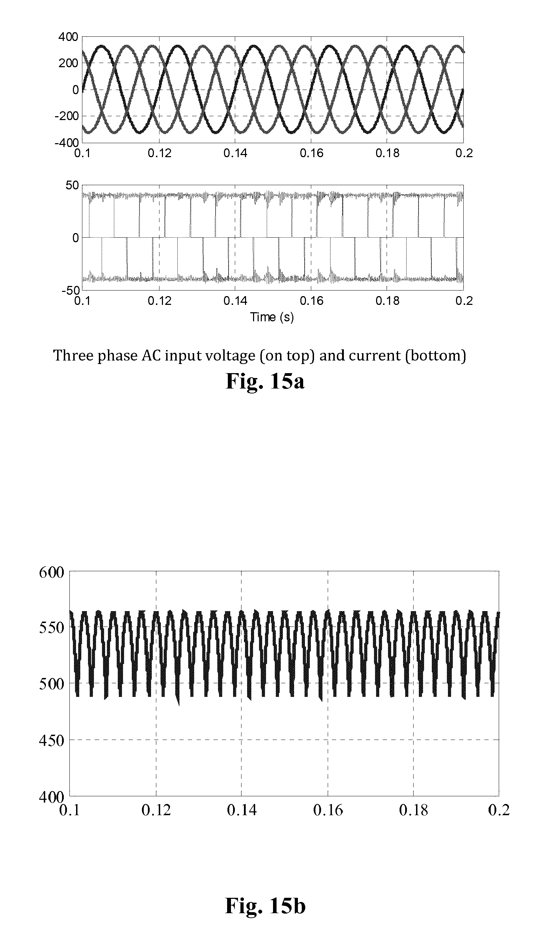

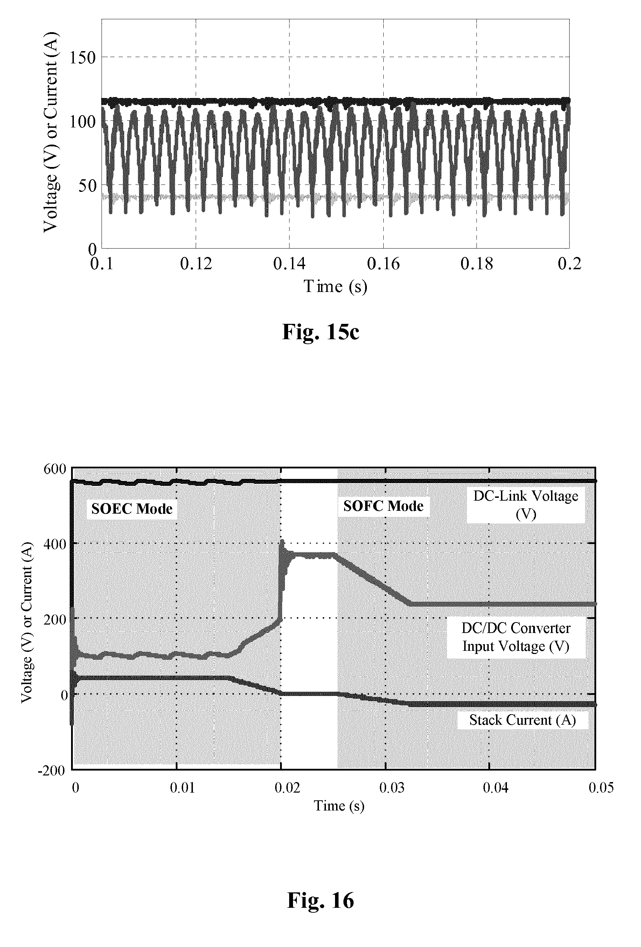

One of the important advantages of the present invention is that it can operate without DC-bus capacitors, which normally are electrolytic capacitors and which limit the lifetime of the whole power supply system. Figure 15 shows simulation results for an electrolysor current of 40 A, where the DC-bus capacitors (C2 on Fig. 10) have been removed.

From Fig. 15 it can be clearly seen that, without DC-bus filter capacitors, there is a high peak-peak voltage ripple existing on DC-bus voltage, but due to the regulation function of the DC-DC converter, the SOEC stack voltage and current can be controlled as a constant. In other words, as desired the DC-DC inverter can be used as an active filter.

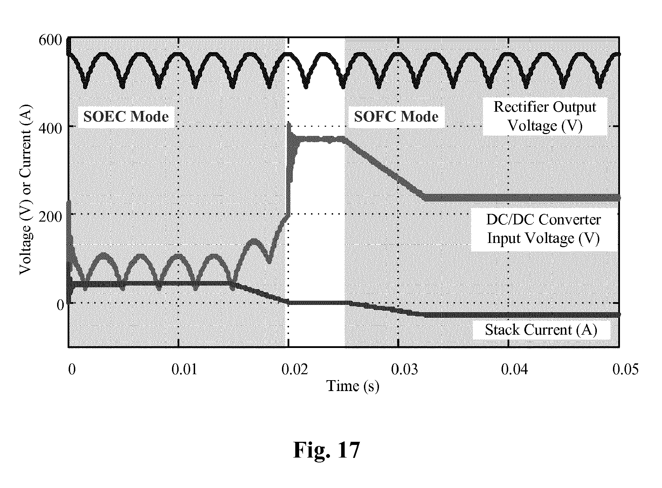

The present invention can operate as a bi-directional power converter, for example providing power conversion for solid oxide cell stacks operating in either electrolysor (SOEC) or fuel cell (SOFC) mode as shown in Fig. 4 The results of simulations of a system configuration according to Fig. 10 and Fig. 4 are shown in Fig. 16 for a configuration with a DC-bus capacitor and in Fig. 17 for a configuration without a DC-bus capacitor.

Again it is seen that also in the bi-directional embodiment of the present invention, the power supply unit operates as desired. Furthermore, also the bi-directional embodiment of the present invention can operate with low voltage and current ripples on the load when no DC-bus capacitor is used and the converter operates as an active filter.

**Claims**

1. An AC-to-DC electrical power converting unit configuration consisting of one or several AC-to-DC rectifiers and one or several electrical power converters (DC-to-DC or DC-to-AC) connected to one or several DC loads, wherein the loads and the power converters are coupled in series such that the same current flows through the input of the loads and the input of the power converters, and wherein the input power to the series of loads and converters is provided by the output of the rectifiers.

2. A configuration according to claim 1, wherein the current through the loads can be actively controlled by the power converters.

3. A configuration according to claim 2, wherein the current through the loads can be actively controlled by the power converters with minimum currents less than 5 A, preferably less than 1 A, and maximum currents larger than 10 A, preferably larger than 50 A.

4. A configuration according to claim 1, wherein the converter input power capacity is less than 80% of the maximum output power of the rectifiers, preferably less than 50% of the maximum output power of the rectifiers and most preferably less than 25% of the maximum output power of the rectifiers.

5. A configuration according to claim 1, wherein the output power from the converter is used with high efficiencies for relevant purposes, such purposes being e.g. feeding the converter output power back to the loads, feeding the converter output power to the balance-of-plant of the system, such as control system, heaters, blowers or motors, or feeding the converter output power to the power grid or to the rectifier input.

6. A configuration according to claim 1, where the net loss of the power supply system is less than 10%, preferably less than 3% and most preferably less than 1%.

7. A configuration according to claim 1, where the load is one or more electrochemical units.

8. A configuration according to claim 1, where the load is one or more electrolysis units based either on alkaline technology, on polymer electrolyte membrane (PEM) fuel cell technology or on solid oxide electrolysis cell (SOEC) technology.

9. A configuration according to claim 1, where the rectifier is a 1-phase or 3-phase rectifier.

10. A configuration according to claim 1, where no capacitors or only small capacitors are used after the rectifiers to reduce the ripple on the DC signal fed to the loads and converters, and where the ripple from the rectifiers is removed by the converters operating as active filters.

11. A configuration according to claim 10, where the active filtering of the converters reduces the power ripple on the load input to less than 50%, preferably to less than 10% and most preferably to less than 2% of the ripple from the rectifier.

12. A configuration according to claim 10, where the total capacity of the capacitors used on the DC-bus between the rectifier output and the load inputs is lower than 5000 $\mu$F, preferably lower than 1000 $\mu$F and most preferably lower than 200 $\mu$F.

13. A configuration according to claim 1, where a switching matrix enables bi-directional operation by allowing a DC power source to be included, and where said power source can be coupled to the power converters.

**14.** Configuration according to claim 13, where the power capacity is larger when a power load is connected than when a power source is connected.

**15.** Configuration according to claim 14, where the power capacity is at least 25% larger, preferably at least 100% larger and most preferably at least 400% larger when a power load is connected than when a power source is connected.

**16.** Configuration according to any of the preceding claims, wherein loads, such as electrolysis systems, and power sources, such as fuel cells or solar cells, can be coupled flexibly to the same converter.

**17.** Configuration according to claim 16, wherein the loads are SOEC units and the power sources are SOFC units, which are coupled flexibly to the same converter.

**Fig. 1**

**Fig. 2a**

**Fig. 2b**

**Fig. 2c**

**Fig. 3**

**Fig. 4a**

**Fig. 4b**

**Fig. 4c**

Cell Voltage (V)

1.5

1.1

0.7

SOEC

SOFC

60

30  Cell Current (A)

**Fig. 5**

Electrolysor
Stack 1

Electrolysor
Stack 2

⋮

Electrolysor
Stack *n*

AC  Rectifier

*Sw*

Heater

Converter

Excess
Power

**Fig. 6**

**Fig. 7**

**Fig. 8**

**Fig. 9**

**Fig. 10**

**Fig. 11a**

**Fig. 11b**

**Fig. 12a**

**Fig. 12b**

**Fig. 13a**

**Fig. 13b**

**Fig. 14a**

**Fig. 14b**

Three phase AC input voltage (on top) and current (bottom)

**Fig. 15a**

**Fig. 15b**

**Fig. 15c**

**Fig. 16**

**Fig. 17**

Europäisches
Patentamt

European
Patent Office

Office européen
des brevets

# EUROPEAN SEARCH REPORT

Application Number

EP 14 17 5397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 032685 A (SHINKO PANTEC CO LTD) 28 January 2000 (2000-01-28) | 1 | INV. H02J3/38 H01M8/24 H02M3/158 |
| Y | * abstract; figures 1-3 * | 2-17 | |
| X | EP 1 868 279 A1 (ECOLE POLYTECH [CH]; EUROP ORG FOR NUCLEAR RESEARCH [CH]) 19 December 2007 (2007-12-19) | 1 | |
| Y | * paragraphs [0028], [0031], [0050]; figures 5,6,10-13 * | 2-17 | |
| X | EP 2 626 969 A2 (REFUSOL GMBH [DE]) 14 August 2013 (2013-08-14) | 1 | |
| Y | * paragraphs [0016], [0056], [0058], [0060] - [0062], [0081]; figures 2-6 * | 2-17 | |

TECHNICAL FIELDS
SEARCHED (IPC)

H02J
H01M
H02M

The present search report has been drawn up for all claims

| Place of search | Date of completion of the search | Examiner |
|---|---|---|
| The Hague | 14 November 2014 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 963 761 A1**

ANNEX TO THE EUROPEAN SEARCH REPORT
ON EUROPEAN PATENT APPLICATION NO.

EP 14 17 5397

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2014

| Patent document cited in search report | | Publication date | Patent family member(s) | | Publication date |
|---|---|---|---|---|---|
| JP 2000032685 | A | 28-01-2000 | NONE | | |
| EP 1868279 | A1 | 19-12-2007 | AT | 460002 T | 15-03-2010 |
| | | | CA | 2655023 A1 | 21-12-2007 |
| | | | EP | 1868279 A1 | 19-12-2007 |
| | | | EP | 2033295 A1 | 11-03-2009 |
| | | | JP | 5095731 B2 | 12-12-2012 |
| | | | JP | 2009540786 A | 19-11-2009 |
| | | | WO | 2007143868 A1 | 21-12-2007 |
| EP 2626969 | A2 | 14-08-2013 | DE | 102012002599 A1 | 14-08-2013 |
| | | | EP | 2626969 A2 | 14-08-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.W. KOLAR ; T. FRIEDLI.** The Essence of three-phase PFC rectifier systems Part I. *IEEE Transactions on Power Electronics,* January 2013, vol. 28 (1), 176-198
- **T. FRIEDLI ; M. HARTMANN ; J.W. KOLAR.** The Essence of three-phase PFC rectifier systems Part II. *IEEE Transactions on Power Electronics,* February 2014, vol. 29 (2), 543-560
- **B.N. SINGH et al.** A review of three-phase improved power quality AC-DC converters. *IEEE Transactions on Industrial Electronics,* March 2004, vol. 51 (3), 641-660
- **R. W. ERICKSON ; D. MAKSIMOVIC.** Fundamentals of Power Electronics. Springer, 2001
- **M. LISERRE ; A. DELL'AQUILA ; F. BLAABJERG.** An overview of three-phase voltage source active rectifiers interfacing utility. *Bologna Power Tech Conference,* 2003
- **A. STUPAR ; T. FRIEDLI ; J. MINIBOCK ; J.W. KOLAR.** Towards a 99% efficient three-phase Buck type PFC rectifier for 400 V DC distribution systems. *IEEE Transactions on Power Electronics,* April 2012, vol. 27 (4), 1732-1744
- Roadmap for MW alkaline electrolysis. *The Partnership for Hydrogen and Fuel Cells,* 2012